# NEW EUROPEAN PATENT SPECIFICATION

(11) **EP 0 507 408 B2**
(45) Date of publication and mention of the opposition decision: **14.03.2001**
(45) Mention of the grant of the patent: 08.03.1995
(21) Application number: 92200920.4
(22) Date of filing: 01.04.1992
(51) Int. Cl.: A01D 75/20, A01D 78/10

(54) **An agricultural machine**
Landwirtschaftliche Maschine
Machine agricole

(30) Priority: 03.04.1991 NL 9100572
(43) Date of publication of application: 07.10.1992
(73) Proprietor: MAASLAND N.V., 3155 PD Maasland (NL)
(72) Inventor: Bom, Cornelis Johannes Gerardus, NL-3181 VC Rozenburg (NL)
(74) Representative: Corten, Maurice Jean F.M.

(56) References cited:
- EP-A- 0 083 460
- EP-A- 0 273 513
- DE-U- 8 709 233
- DE-U- 8 807 510
- FR-A- 2 379 244
- FR-A- 2 560 737
- GB-A- 2 155 298
- NL-A- 8 400 715
- Leaflet "KUHN GIROSTAR GRS 25 N", Kuhn S.A., Saverne Cedex, France, 1989"

## Description

The invention relates to an agricultural machine as claimed in the preamble of claim 1.

Such a machine is known from the Kuhn hay-making machine Girostar GRS 25 N. It is the object of the invention to improve the machine described in the preamble of claim 1 by adding the features of the characterizing part of claim 1.

For a better understanding of the invention and to show how the same may be carried into effect, reference will now be made, by way of example, to the accompanying drawings, in which:
Figure 1 is a plan view of an embodiment of a machine according to the invention;
Figure 2 schematically illustrates a transport position of the machine in accordance with Figure 1, and
Figures 3 and 4 show details of the machine shown in Figures 1 and 2.

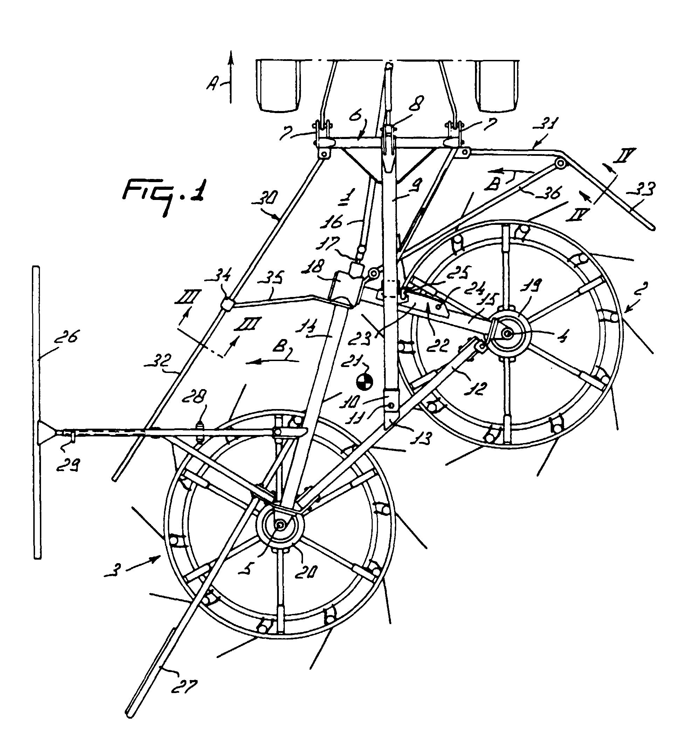

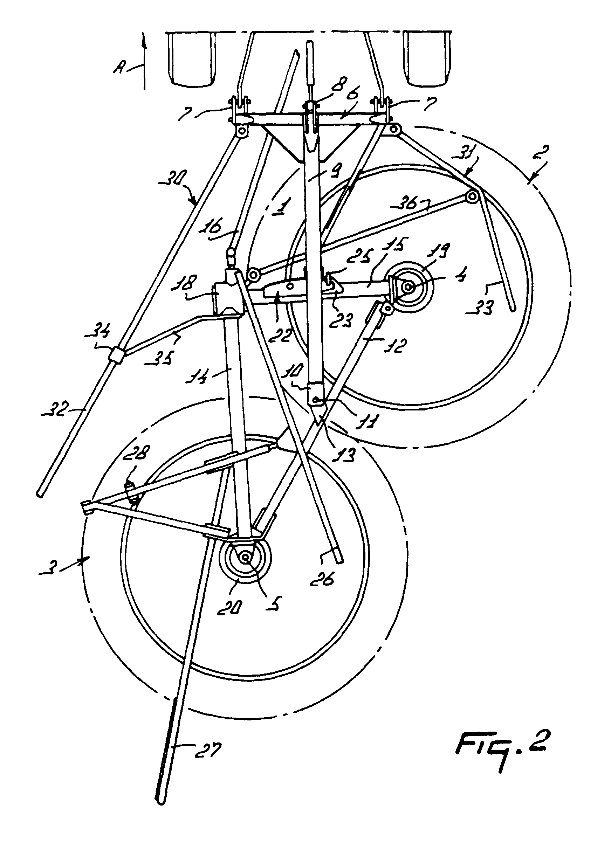

The embodiment of the hay-making machine according to the invention, shown in the drawings, includes a frame 1 supporting working members, particularly rake members, 2 and 3. The machine moves in the direction of operative travel A and in this embodiment the rake members 2 and 3 are driven in the same sense of rotation B. The rake members 2 and 3 are driven about upwardly directed rotary shafts 4 and 5, respectively, by a tractor hauling the machine. Each of these rotary shafts is located in a vertical plane located parallel to the direction of operative travel A. Taken in the upward direction and relative to the direction of operative travel A, the rotary shafts 4 and 5 are arranged at a forward angle and enclose with a vertical line an angle of approximately 5 - 15°. As will be apparent from Figure 1, the rotary shaft 4 of the rake member 2 is arranged, in a side view and taken relative to the direction of operative travel A, at some distance before the rotary shaft 5 of the rake member 3. The rake members 2 and 3 are of an identical construction. Taken relative to the direction of operative travel A, the rake member 3 is provided entirely behind a plane through the centre line of the rotary shaft 4, which extends transversely to the direction of operative travel A. The machine shown in the drawings acts as a side-feed rake which conveys crop picked-up by the rake member 2 to the rake member 3 and deposits same in a swath at the outer side of the rake member 3.

The frame 1 of the machine incluces a trestle 6 which, taken in the direction of operative travel A, is in the shape of an inverted U, connecting points 7 being provided for the purpose of connecting the machine to the lower lifting arms of a three-point lifting hitch of a tractor near the lower ends of the legs of this U-shaped trestle, whilst near the upper point of the U-shaped trestle there is provided a connecting point 8 for connecting the machine to an upper lifting arm of the said three-point lifting hitch. Rigidly connected to the trestle 6 is a drawbar 9 which - taken in a plan view - extends perpendicularly to a plane to which the trestle 6 runs parallel, i.e. approximately parallel to the direction of operative travel A. The drawbar 9 is arranged symmetrically relative to a vertical symmetry plane of the trestle 6, which plane extends in the direction of operative travel A, and a symmetry plane of the tractor. From the trestle 6, the drawbar 9 extends rearwardly and at its rearmost end is provided with a fork 10 in which a pivotal shaft 11 is supported, which is in a fixed position relative to the trestle 6. A frame beam 12, which rigidly connects the bearings of the rotary shafts 4 and 5, is pivotal about the pivotal shaft 11 by means of supports 13 which are supported around the pivotal shaft 11 and are rigidly connected to the beam 12. The supports 13 are provided approximately halfway the length of the frame beam 12 and, in a plan view, the pivotal shaft 11 is arranged relative to the direction of operative travel A at a very short distance in front of the leading side of the frame beam 12, in such a manner that the pivotal shaft 11 is located halfway the region between the rotary shafts 4 and 5.

The pivotal shaft 11 extends upwardly in such a manner that, taken from bottom to top and relative to the direction of operative travel A, its centre line is at a slightly rearward angle and is positioned in a vertical plane extending in the direction of operative travel A.

The bearings of the rotary shafts 4 and 5 of the rake members are rigidly interconnected not only by the frame beam 12 but also by means of two frame beams 14 and 15 which - taken relative to the direction of operative travel A - are located in front of a plane through the centre lines of the rotary shafts 4 and 5. From the bearing of the rear rake wheel 3, the frame beam 14 extends forwardly and at the same time slightly towards the front rake wheel 2. From the bearing of the front rake wheel 2, the frame beam 15 extends predominantly laterally towards the leading end of the frame beam 14. As will be apparent from the plan view in Figure 1, the centre lines of the tubular frame beams 14 and 15 mutually enclose an angle of 90°. The angular point, in which the centre lines of the frame beams 14 and 15 perpendicularly intersect, forms, in a plan view, together with the rotary shafts 4 and 5 a right-angled triangle.

The hollow tubular frame beams 14 and 15 are not only used to support the rake members but also act as support means for the drives of the rake members 4 and 5. As is shown in Figure 1, the direction of the frame beam 14 only deviates in a comparatively very slight degree from the direction of an intermediate shaft 16, which connects a power take-off shaft of the tractor to an ingoing shaft 17, which is arranged near the afore-mentioned angular point between the frame beams 14 and 15 and forms part of a gearbox 18 provided near the angular point between the frame beams 14 and 15. From the gearbox 18, drive shafts extend through the frame beams 14 and 15 to known per se gearboxes 19 and 20 which are arranged near the bearings of the respective rake members 3 and 2. The component parts 12, 14, 15, 18 constitute a frame portion which is pivotal about the pivotal shaft 11 relative to the further frame portions 6, 9.

To enable them to act as crop-moving members, it is important for each rake member to be arranged symmetrically, taken in a plan view, relative to a vertical plane extending in the direction of operative travel A and including a point of the centre line of the rotary shaft. From this it directly follows that the entire centre line of the rotary shaft must be located in that plane, as has been mentioned already in the foregoing. If now, taken in a side view, the rake wheels are entirely or partly located one behind the other and if, from a constructional point of view, one wants to have the drives of the rake members be effected about forwardly inclining rotary shafts, then it will be obvious that on driving the rake members from one central point (the ingoing shafts 17) the drive 20 of the rear rake member 3 must be at a greater height above the soil surface than the drive 19 of the front rake member 2, when the machine is in the operating position.

Taken relative to the direction of operative travel A, or in a side view, the common centre of gravity of the rake members 2 and 3 and the pivotal frame portion interconnecting the rake members is located remotely from the obliquely rearwardly inclining pivotal shaft 11, when the machine is in its operating position. The said centre of gravity of the component parts 2, 3, 12, 14, 15, 18, 19 and 20 is denoted in Figure 1 by the reference numeral 21. In this embodiment, taken in the same direction and relative to the direction of operative travel A - the centre of gravity 21 is located at some distance in front of the pivotal shaft 11. Put differently, the centre of gravity 21 is remote from the lowest point of a circle which is located in a plane directly perpendicular to the centre line of the pivotal shaft, includes the centre of gravity and has the point of intersection of the centre line of the pivotal shaft and this plane as its centre.

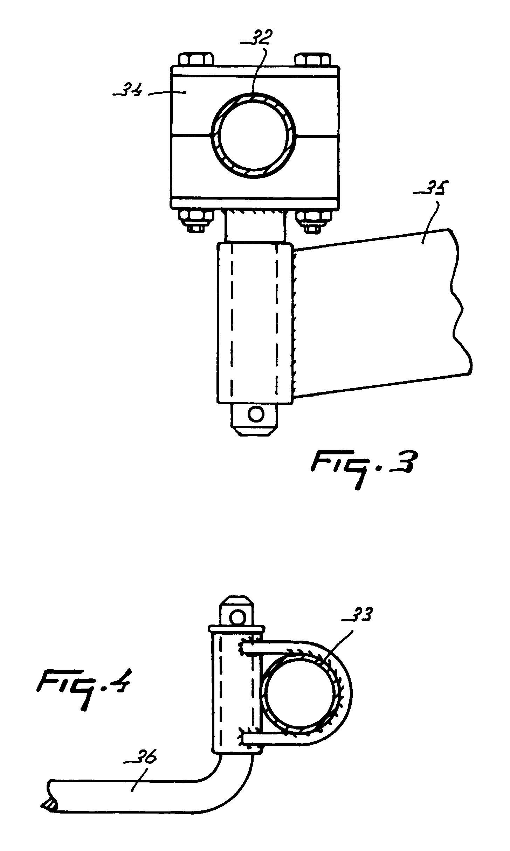

From the operating position of the machine, shown in Figure 1, the component parts 2, 3, 12, 14, 15, 18, 19 and 20 of the machine, which are jointly pivotal about the pivotal shaft 11, can be pivoted to a transport position shown in Figure 2. To that end, a locking device 22 is disposed on the upper side of the frame beam 15 and at the bottom side of the drawbar 9, more specifically on that portion of the frame beam 15 in which during said adjustment of the machine the drawbar 9 located above the frame beams 14, 15 pivots over the frame beam 15. Welded to the upper side of the frame beam 15 is a locking plate 23 which is provided with two mutually interspaced apertures 24. A locking pin 25, which is connected capably of being slid upwards and downwards to one side of the drawbar 9, can be inserted through one of the apertures 24. That aperture 24 that is located nearest to the rotary shaft 4 is intended for locking in the transport position shown in Figure 2, in which the total width of the machine - taken in the direction of operative travel A - is significantly reduced with a view to the legal regulations for road transport.

In operation, the hay-making machine in accordance with the invention is arranged relative to the tractor in the manner shown in Figure 1. Since the symmetry plane of the drawbar 9 approximately coincides with the vertical symmetry plane of the trestle 6 and with the vertical longitudinal symmetry plane of the tractor and the pivotal shaft 11 is arranged approximately halfway the spacing between the rotary shafts 4 and 5, the rake members 2 and 3 are in an approximately symmetrical position relative to the tractor, taken in the direction of operative travel A. The intermediate shaft 16 connected to the power take-off shaft of the tractor drives the ingoing shaft 17 of the gearbox 18. Since the angle between the centre line of the intermediate shaft 16 and that of the frame beam 14 is very small (approximately 0 - 10°) and at the same time the angle between the centre line of the intermediate shaft 16 and the power take-off shaft of the tractor covers the same very small angle, bending moments which periodically occur in the universal joints included in the intermediate shaft 16 (the rearmost of which is located near the ingoing shaft 17) are very low, so that loading of the machine frame due to the drive and consequently also the magnitude of the resultant reaction forces in the region of the pivotal shaft 11 and the locking pin 25, are also very slight, so that a quiet, smooth running of the machine can be obtained. At the same time, because of the presence of the frame beams 14 and 15 which enclose a mutual angle of 90° and - taken in the direction of operative travel A - are located in front of the plane through the rotary shafts 4 and 5, the intermediate shaft 16 is of a short length. The length of this intermediate shaft would be very large - if the ingoing shaft 18 were located in the region between the rotary shafts 4 and 5 as in known machines of this type - since the pivotal shaft 11 must be provided behind the tractor at a distance of a given length determined by the transport position shown in Figure 2, which is required to remain within the legally prescribed width for road transport.

The crop picked-up by the rake member 2 is discharged by the rake member 2 in the region between the rake members 2 and 3 and picked up by the rake member 3, is thereafter deposited by the rake member 3 in the direction B at the lateral side of the rake member 3 against a swath board 26 and, guided by a swath board 27, is deposited in a swath at the lateral side of the machine. The swath board 26 is disposed capably of pivoting about a shaft 28 and, when the machine is adjusted to the transport position shown in Figure 2, can be hinged upwards above the machine. In addition, the width of the swath to be deposited can be set with the aid of an adjusting element 29.

As has already been described in the foregoing, the common centre of gravity of the frame beams 12, 14 and 15, the gear box 18, the gear boxes 19 and 20 and the rake members 2 and 3 is denoted by the reference numeral 21. In a side view and in a direction perpendicular to the direction of operative travel A, the centre of gravity 21 is located, taken in the direction of operative travel, at some distance in front of the centre line of the pivotal shaft 11. In addition, it has already been described in the foregoing that the pivotal shaft 11 is located in a plane positioned vertically in the direction of operative travel A and, taken in the upward direction, is arranged such that it slopes obliquely rearwardly. If now the total machine is lifted (by lifting the three-point lifting hitch of the tractor) from the operating position shown in Figure 1, more in particular through such a height that the bottom sides of the (non-shown) ground wheels are just clear from the soil (so that the slope of the pivotal shaft 11 has remained substantially unchanged), the entire pivotal part 2, 3, 12, 14, 15, 18, 19, 20 will automatically swivel, after having been unlocked by removing the locking pin 25 from that aperture 24 of the locking plate 23 that controls the operating position, from the operating position towards the position shown in Figure 2, since the centre of gravity 21 will pivot towards the lowest point of its path around the pivotal shaft 11. After the locking pin 25 has been unlocked, no large forces are required from the operator to pivot the pivotal portion to the transport position, as he only has the task of stopping the automatic pivotal motion at the proper instant, so that he can insert the locking pin 25 into the aperture 24 intended for the transport position. In the position shown in Figure 2, the entire transport width of the machine, for the above-mentioned dimensions, is approximately 3 m. Taken in a direction parallel to the direction of operative travel A, the length of the assembly of the two rake members 2 and 3, which length is 324 cms in the operating position, is increased to approximately 368 cms in the transport position shown in Figure 2.

If the machine is to be adjusted from the transport position of Figure 2 to the operating position of Figure 1, the machine is lifted by lifting the lifting hitch of the tractor through such a height that the direction of the centre line of the pivotal shaft 11 changes from inclining backwards to inclining forwards, seen in the upward direction. Prior to this, the intermediate shaft 16 was detached from the ingoing shaft 17 and suspended from the nearest vertical leg of the trestle 6. This change in the direction of the centre line of the pivotal shaft 11 is definitely the result of the dimensioning of the lifting hitches customary for tractors. Since now, taken in the upward direction, the pivotal shaft 11 inclines forwardly, the pivotal assembly will pivot back towards the operating position of Figure 1 after having been unlocked by detaching the locking pin 25, so that only the locking pin need be inserted in the aperture 24 intended for the operating position, in order to complete the adjustment of the machine.

The machine as illustrated in Figures 1 and 2 is furthermore provided with two protection members 30, 31, which are arranged such between the pivotal frame portion 12, 14, 15, 18, 19, 20 and the further portion of the frame 6, 9 that, when the frame portion cum rake members 2, 3 pivots from the operating position shown in Figure 1 to the transport position shown in Figure 2, and vice versa, the protection members 30, 31 will automatically move from a position in which they shield the rake members 2, 3 to a position located more inwardly, and vice versa. The protection members 30, 31 are constituted by the rake members 2, 3 and the rod-like elements 32, 33 which shield the leading side and are connected pivotably to the trestle 6.

The rod-like element 32 is here constituted by a straight rod; however, it is sufficient for this rod to have a straight portion over at least part of its length and this straight portion is movable through a sliding block 34. The sliding block 34 is connected rigidly to the pivotal frame portion and more specifically to the gearbox 18 via a carrier rod 35.

Here the rod-like element 33 is constituted by a curved rod which is connected pivotably to one end of a carrier rod 36. At its other end, this carrier rod 36 is connected pivotably to the pivotal frame portion, more particularly to the gearbox 18.

When the machine pivots from the operating position to the transport position, the gearbox 18 is rotated slightly obliquely rearwardly relative to the pivotal shaft 11. As a result thereof, the sliding block 34, since this block is connected rigidly to the gearbox 18 via the carrier rod 35, moves rearwardly and at the same time slightly inwardly, i.e. towards the longitudinal axis of the drawbar 9. In this situation, the rod-like element, which is movable in the sliding block 34, is rotated inwardly about the connection point on the trestle 6. If the gearbox 18 is rotated through a slight angle to the rear, then the rod-like element 33 is pulled inwardly by the carrier rod 35. In the transport position, the rod-like element 33 is then located above the rake member 2. Before adjusting the machine to the transport position, the swath board 26 must first be hinged upwardly.

## Claims

1. An agricultural machine, a hay-making machine in particular, having a frame (1) which is couplable to a three-point lifting hitch of a tractor and includes a frame portion (12 to 15) which supports working members (2, 3) and, relative to a further portion (6, 9) of the frame, is pivotal about an upwardly directed pivotal shaft (11) together with the working members (2, 3) from an operating position to a transport position and vice versa, wherein it has one protection member (31) arranged in such a manner between the pivotal frame portion (12 to 15) and the further portion (6, 9) of the frame that when the frame portion (12 to 15) supporting the working members (2, 3) pivots from the operating position to the transport position and vice versa, the protection member (31) automatically moves from a position in which it shields one of the working members (2) to a more inwardly located position and vice versa, the machine having a second protection member (30) shielding another working member (3), characterized in that also the second protection member (30) is movably arranged between the pivotal frame portion (12-15) and the further frame portion (6, 9) of the frame, such that when the frame portion (12, 15) pivots from the operating position to the transport position the second protection member (30) automatically moves from a position in which it shields said other working member (3) into a more inwardly located position and vice versa.

2. An agricultural machine as claimed in claim 1, characterized in that the protection member (32, 33) is constituted by a rod-like element (32, 33) which is connected pivotably to the further portion (6, 9) of the frame (1).

3. An agricultural machine as claimed in claim 2, characterized in that the rod-like element (32) has a straight portion over at least part of its length and that this straight portion is movable through a sliding block (34), this sliding block (34) being connected rigidly to the pivotal frame portion (12 to 15).

4. An agricultural machine as claimed in claim 3, characterized in that the sliding block (34) is connected to the pivotal frame portion (12 to 15) via a carrier rod (35).

5. An agricultural machine as claimed in claim 2, characterized in that a carrier rod (36) is present, which has one end connected pivotably to the pivotal frame portion (12 to 15) and the other end to the rod-like element (33).

6. An agricultural machine as claimed in claim 4 or 5, characterized in that the carrier rod (35, 36) is connected to a portion of the gearbox (18) which forms part of the pivotal frame portion (12 to 15) and via which the drive is effected from a couplable power take-off shaft of a tractor to the working members (2, 3).

7. An agricultural machine as claimed in claim 6, characterized in that the pivotal frame portion (12 to 15) is constituted by a frame beam (12), to which the working members (2, 3) are fitted at or near their ends and by two frame beams (14, 15) which extend perpendicularly relative to each other and are connected rigidly to the first-mentioned frame beam (12) and in combination therewith form a right-angled triangle, the right-hand angle of which, taken in the direction of operative travel, is located in front of the first-mentioned frame beam (12), whilst this first-mentioned frame beam (12) is pivotal relative to the further portion (6, 9) of the frame (1), the gearbox (18) being arranged in the region of the right angle of the said right-angled triangle.

8. An agricultural machine as claimed in any one of the preceding claims, characterized in that the pivotal shaft (11) is provided at or near the end of a drawbar (9) which is connected rigidly to a tractor-couplable trestle (6), the protection members (30, 31) being connected pivotably to this trestle (6).

## Patentansprüche

1. Landwirtschaftliche Maschine, insbesondere Heuwerbungsmaschine, mit einem Rahmen (1), der an eine Dreipunkt-Hebevorrichtung eines Schleppers anschließbar ist und einen Rahmenteil (12 bis 15) aufweist, der Bearbeitungsglieder (2, 3) trägt und zusammen mit den Bearbeitungsgliedern (2, 3) relativ zu einem weiteren Teil (6, 9) des Rahmens um eine aufwärts gerichtete Schwenkachse (11) von einer Arbeitslage in eine Transportlage und zurück schwenkbar ist, wobei die Maschine ein Schutzelement (31) aufweist, das zwischen dem schwenkbaren Rahmenteil (12 bis 15) und dem weiteren Teil (6, 9) des Rahmens derart angeordnet ist, daß sich das Schutzelement (31) beim Schwenken des die Bearbeitungsglieder (2, 3) tragenden Rahmenteiles (12 bis 15) von der Arbeitslage in die Transportlage und zurück automatisch von einer Position, in der es eines der Bearbeitungsglieder (2) abschirmt, in eine weiter innen liegende Position und zurück bewegt, wobei die Maschine ein zweites Schutzelement (30) aufweist, das ein weiteres Bearbeitungsglied (3) abschirmt,
dadurch gekennzeichnet, daß auch das zweite Schutzelement (30) beweglich zwischen dem schwenkbaren Rahmenteil (12 bis 15) und dem weiteren Rahmenteil (6, 9) des Rahmens derart angeordnet ist, daß sich das zweite Schutzelement (30) beim Schwenken des Rahmenteiles (12, 15) von der Arbeitslage in die Transportlage automatisch von einer Position, in der es das andere Bearbeitungsglied (3) abschirmt, in eine weiter innen liegende Position und zurück bewegt.

2. Landwirtschaftliche Maschine nach Anspruch 1,
dadurch gekennzeichnet, daß das Schutzelement (30, 31) durch ein stangenförmiges Element (32, 33) gebildet ist, das mit dem weiteren Teil (6, 9) des Rahmens (1) schwenkbar verbunden ist.

3. Landwirtschaftliche Maschine nach Anspruch 2,
dadurch gekennzeichnet, daß das stangenförmige Element (32) über mindestens einen Teil seiner Länge einen geraden Abschnitt aufweist, und daß dieser gerade Abschnitt durch ein Gleitstück (34) hindurch zu bewegen ist, das mit dem schwenkbaren Rahmenteil (12 bis 15) starr verbunden ist.

4. Landwirtschaftliche Maschine nach Anspruch 3,
dadurch gekennzeichnet, daß das Gleitstück (34) über eine Tragstange (35) mit dem schwenkbaren Rahmenteil (12 bis 15) verbunden ist.

5. Landwirtschaftliche Maschine nach Anspruch 2,
dadurch gekennzeichnet, daß eine Tragstange (36) vorgesehen ist, deren eines Ende mit dem schwenkbaren Rahmenteil (12 bis 15) und deren anderes Ende mit dem stangenförmigen Element (33) schwenkbar verbunden ist.

6. Landwirtschaftliche Maschine nach Anspruch 4 oder 5,
dadurch gekennzeichnet, daß die Tragstange (35, 36) mit einem Teil des Getriebes (18) verbunden ist, das Bestandteil des schwenkbaren Rahmenteiles (12 bis 15) ist, und über welches der Antrieb von einer anschließbaren Zapfwelle eines Schleppers auf die Bearbeitungsglieder (2, 3) übertragen wird.

7. Landwirtschaftliche Maschine nach Anspruch 6,
dadurch gekennzeichnet, daß der schwenkbare Rahmenteil (12 bis 15) durch einen Rahmenbalken (12), an dem die Bearbeitungsglieder (2, 3) an oder nahe ihren Enden angebracht sind, sowie durch zwei Rahmenbalken (14, 15) gebildet ist, die sich senkrecht zueinander erstrecken, mit dem ersten Rahmenbalken (12) starr verbunden sind und zusammen mit diesem ein rechtwinkeliges Dreieck bilden, dessen rechter Winkel in bezug auf die Arbeitsrichtung vor dem ersten Rahmenbalken (12) liegt, wobei der erste Rahmenbalken (12) relativ zu dem weiteren Teil (6, 9) des Rahmens (1) schwenkbar ist, und wobei das Getriebe (18) im Bereich des rechten Winkels des rechtwinkeligen Dreieckes angeordnet ist.

8. Landwirtschaftliche Maschine nach einem der vorhergehenden Ansprüche,
dadurch gekennzeichnet, daß die Schwenkachse (11) an oder nahe dem Ende eines Zugbalkens (9) angeordnet ist, welcher mit einem an einen Schlepper anzuschließenden Anbaubock (6) starr verbunden ist, wobei die Schutzelemente (30, 31) mit diesem Anbaubock (6) schwenkbar verbunden sind.

## Revendications

1. Machine agricole, en particulier machine faneuse, ayant un châssis (1) qui peut être couplé à un dispositif d'attelage-levage à trois points d'un tracteur et qui comprend une partie de châssis (12 à 15) qui supporte des organes de travail (2, 3) et qui est pivotante par rapport à une autre partie (6, 9) du châssis, autour d'un arbre de pivotement (11) dirigé vers le haut, ensemble avec les organes de travail (2, 3) à partir d'une position de travail vers une position de transport et vice versa, un organe de protection (31) étant disposé entre la partie de châssis pivotante (12 à 15) et l'autre partie (6, 9) du châssis de telle manière que, quand la partie de châssis (12 à 15) supportant les organes de travail (2, 3) pivote à partir de la position de travail vers la position de transport et vice versa, l'organe de protection (31) se déplace automatiquement à partir d'une position dans laquelle il masque un des organes de travail (2) vers une position située plus à l'intérieur, et vice versa, la machine ayant un second organe de protection (30) masquant un autre organe de travail (3)
caractérisée en ce qu'aussi le second organe de protection (30) est disposé de manière mobile entre la partie de châssis pivotante (12 à 15) et l'autre partie du châssis (6, 9), de telle manière que lorsque la partie de châssis (12 à 15) pivote à partir de la position de fonctionnement vers la position de transport, le second organe de protection (30) se déplace automatiquement d'une position dans laquelle il masque ledit autre organe de travail (3) vers une position située plus à l'intérieur, et vice versa.

2. Machine agricole selon la revendication 1, caractérisée en ce que l'organe de protection (32, 33) est constitué par un élément (32, 33) analogue à une tige qui est reliée de manière pivotante à l'autre partie (6, 9) du châssis (1).

3. Machine agricole selon la revendication 2, caractérisée en ce que l'élément (32) en forme de tige a une partie droite sur au moins une partie de sa longueur et que cette partie droite est mobile dans un bloc coulissant (34), ce bloc coulissant (34) étant relié rigidement à la partie de châssis pivotante (12 à 15).

4. Machine agricole selon la revendication 3, caractérisée en ce que le bloc coulissant (34) est relié à la partie de châssis pivotante (12 à 15) au moyen d'une tige porteuse (35).

5. Machine agricole selon la revendication 2, caractérisée par la présence d'une tige porteuse (36) dont l'extrémité est reliée de manière pivotante à la partie de châssis pivotante (12 à 15) et l'autre extrémité à l'élément (33) en forme de tige.

6. Machine agricole selon la revendication 4 ou 5, caractérisée en ce que la tige porteuse (35, 36) est reliée à une partie de la boîte d'engrenages (18) faisant partie de la partie de châssis pivotante (12 à 15) et par laquelle boîte l'entraînement est réalisé à partir d'un arbre connectable de prise de force d'un tracteur jusqu'aux organes de travail (2, 3).

7. Machine agricole selon la revendication 6, caractérisée en ce que la partie de châssis pivotante (12 à 15) est constituée par une poutre de châssis (12) à laquelle sont reliés les organes de travail (2, 3) sur leurs extrémités ou près de celles-ci, et par deux poutres de châssis (14, 15) perpendiculaires l'une à l'autre et qui sont reliées à la poutre de châssis (12) précitée et forment, en combinaison avec elle, un triangle rectangle dont l'angle droit est situé, en étant vu dans le sens de marche du travail, en avant de la poutre de châssis (12) précitée, tandis que cette poutre de châssis (12) précitée est pivotante par rapport à l'autre partie (6, 9) du châssis (1), la boîte d'engrenages (18) étant disposée dans la région de l'angle droit dudit triangle rectangle.

8. Machine agricole selon l'une quelconque des revendications précédentes, caractérisée en ce que l'arbre de pivotement (11) est prévu à l'extrémité d'une barre de traction (9) ou près de l'extrémité de cette barre qui est reliée rigidement à un chevalet (6) pouvant être couplé à un tracteur, les organes de protection (30, 31) étant reliés de manière pivotante à ce chevalet (6).
